(19) Europäisches Patentamt / European Patent Office / Office européen des brevets

(11) **EP 4 776 353 A1**

(12) **EUROPEAN PATENT APPLICATION**
published in accordance with Art. 153(4) EPC

(43) Date of publication:
**15.07.2026 Bulletin 2026/29**

(21) Application number: **24862717.6**

(22) Date of filing: **30.08.2024**

(51) International Patent Classification (IPC):
$H01M\ 8/0444^{(2016.01)}$   $C25B\ 15/023^{(2021.01)}$
$G01N\ 1/22^{(2006.01)}$   $G01N\ 5/00^{(2006.01)}$
$H01M\ 8/04^{(2016.01)}$   $H01M\ 8/02^{(2016.01)}$
$H01M\ 8/10^{(2016.01)}$   $H01M\ 8/12^{(2016.01)}$

(52) Cooperative Patent Classification (CPC):
C25B 15/023; G01N 1/22; G01N 5/00; H01M 8/04;
H01M 8/0444; H01M 8/02; H01M 8/10; H01M 8/12;
Y02E 60/50

(86) International application number:
**PCT/JP2024/031162**

(87) International publication number:
**WO 2025/053065 (13.03.2025 Gazette 2025/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.09.2023 JP 2023146467**

(71) Applicants:
• **HORIBA, Ltd.**
  **Kyoto-shi Kyoto 601-8510 (JP)**
• **Horiba Advanced Techno, Co., Ltd.**
  **Kyoto-shi, Kyoto 6018551 (JP)**

(72) Inventors:
• **MIYAMURA, Kazuhiro**
  **Kyoto-shi, Kyoto 601-8511 (JP)**
• **OKADA, Yoichi**
  **Kyoto-shi, Kyoto 601-8510 (JP)**
• **YAMASHITA, Tsubasa**
  **Kyoto-shi, Kyoto 601-8510 (JP)**

(74) Representative: **Müller Hoffmann & Partner
Patentanwälte mbB
St.-Martin-Strasse 64
81541 München (DE)**

(54) **ANALYSIS DEVICE, SPECIMEN EVALUATION SYSTEM, AND ANALYSIS METHOD**

(57) There is provided an analysis device that is used in a test specimen evaluation apparatus that evaluates a condition of a test specimen by analyzing waste liquid from the test specimen. This analysis device includes a component concentration measurement unit that is connected to an exhaust gas flow path through which flows diluted waste liquid created by diluting the waste liquid discharged from the test specimen with a diluent, and that measures a concentration of a component contained in the diluted waste liquid.

FIG.1

EP 4 776 353 A1

**Description**

[Technical Field]

The present invention relates to an analysis device that analyzes waste liquid flowing through an exhaust gas flow path of a test specimen, a test specimen evaluation system, and an analysis method.

[Technical Background]

Conventionally, as an analysis device that is used to analyze a condition of a test specimen such as, for example, a fuel cell or the like, there has been used an analysis device that determines what types of components are being discharged from a fuel cell by measuring a component concentration, which is a concentration of components contained in the waste liquid discharged from the fuel cell.

As shown, for example, in Patent Document 1, an example of this type of analysis device is an analysis device that is provided with a sampling unit that samples waste liquid from a storage unit in which the waste liquid flowing through an exhaust gas flow path of a fuel cell is stored, and supplies the waste liquid from the sampling unit to a sensor unit that measures component concentrations. This analysis device enables the waste liquid to be stably supplied to the sensor unit irrespective of whether the quantity of waste liquid is large or small.

[Documents of the Prior Art]

[Patent Documents]

[Patent Document 1] Patent No. WO2022/255446

[Disclosure of the Invention]

[Problems to be Solved by the Invention]

For example, fuel cells consisting of a single cell or a small number of cells are included among the fuel cells analyzed by the above-mentioned analysis device. In the case of these fuel cells consisting of a single cell or a small number of cells, because the quantity of waste liquid flowing through the exhaust gas flow path of the fuel cell is small, there have been instances in which it has been difficult for the sensor unit to accurately measure a component concentration.

Furthermore, in a case in which the quantity of the waste liquid is small, if air bubbles become mixed into the waste liquid, the effect on the measurement from these air bubbles becomes significant, so that the sensor unit is prevented from accurately measuring a component concentration.

The present invention was therefore conceived in consideration of the above-described problems, and it is a principal object thereof to enable a component concentration to be accurately measured even in a case in which a test specimen such as, for example, a fuel cell consisting of a single cell or a small number of cells that only discharges a small quantity of waste liquid is being analyzed.

[Means for Solving the Problem]

In other words, an analysis device according to the present invention is an analysis device that is used in a test specimen evaluation apparatus that evaluates a condition of a test specimen by analyzing waste liquid from the test specimen, and is characterized in being provided with a component concentration measurement unit that is connected to an exhaust gas flow path through which flows diluted waste liquid created by diluting the waste liquid discharged from the test specimen with a diluent, and that measures a concentration of a component contained in the diluted waste liquid .

If this type of analysis device is employed, then because a diluent is introduced into the exhaust gas flow path through which the exhaust gas discharged from the test specimen flows, the quantity of liquid is only increased by the quantity of the introduced diluent. As a result, because the component concentration measurement unit is able to secure a sufficient liquid quantity when measuring a component concentration, the component concentration can be accurately measured.

Furthermore, because the quantity of liquid is increased by the introduction of the diluent, it is possible to reduce any effects on the measurement caused by air bubbles being mixed into the waste liquid, so that the component concentration measurement section is able to accurately measure component concentrations.

The above-described analysis device is characterized by being provided with a sampling unit that samples the diluted waste liquid from the exhaust gas flow path or from a storage unit that is disposed on the exhaust gas flow path, and with a component concentration measurement unit that measures a concentration of a component contained in the diluted waste liquid that has been sampled by the sampling unit.

If this type of structure is employed, then because the component concentration measurement unit measures the concentration of a component contained in the diluted waste liquid sampled by the sampling unit, it is possible to further ensure that there is a sufficient quantity of liquid when measuring a component concentration.

It is desirable that the analysis device be further provided with an information processing unit that calculates the component concentration in the waste liquid prior to the diluent being introduced therein from the component concentration in the waste liquid after it has been diluted.

If this type of structure is employed, then because a concentration of a component in the waste liquid is calculated by the information processing unit prior to the diluent being introduced therein, because there is only a small quantity of waste liquid, even if the waste liquid is diluted, it is still possible to measure a concentration of a component in this small quantity of waste liquid.

It is also possible to employ a structure in which the information processing unit calculates a dilution ratio of the diluted waste liquid from a quantity of water added to a gas supplied to the test specimen, a quantity of water produced by the test specimen, and a quantity of the diluent, and then calculates a concentration of a component contained in the waste liquid before dilution using this dilution ratio.

If this type of structure is employed, a pre-dilution concentration calculation unit is able to calculate a component concentration of a waste liquid before dilution using the dilution ratio at which the diluent dilutes the waste liquid.

An example of a specific aspect of the calculation of the dilution ratio is shown in the following equation.

$$\text{Dilution ratio} = \frac{A + B + C}{A + B}$$

Here, A is the quantity of liquid added to the supply gas supplied to the test specimen, B is the quantity of liquid produced in the test specimen, and C is the quantity of the diluent introduced by the diluent introduction unit into the exhaust gas flow path.

In a case in which the pre-dilution concentration calculation unit calculates a component concentration of the pre-dilution waste liquid using a dilution ratio, it is preferable that the test specimen be a fuel cell, and that the quantity B of the liquid produced in the test specimen be calculated based on the quantity of power generated by the fuel cell.

If this type of structure is employed, then because the water production reaction in the fuel cell is linked to the power generation of the fuel cell, compared to a case in which the quantity of liquid B produced by the fuel cell is calculated based on the concentration of exhaust gas discharged from the fuel cell, the quantity of liquid B produced by the fuel cell can be calculated directly and simply.

Examples of the test specimen include those that discharge a small quantity of liquid together with a gas such as water electrolysis cells, co-electrolysis catalysts, methanation catalysts, exhaust gas purification catalysts and/or oxidation catalysts.

If this type of structure is employed, then even if the test specimen is a test specimen other than a fuel cell that emits a small quantity of liquid along with the gas, because it is possible to secure a sufficient quantity of liquid to measure a component concentration by introducing a diluent via the diluent introduction unit, a component concentration is able to be accurately measured.

A test specimen evaluation system of the present invention is a test specimen evaluation system that evaluates a condition of a test specimen, and that is provided with a supply gas flow path that supplies a gas to the test specimen, a test specimen evaluation unit that evaluates a condition of the test specimen, an exhaust gas flow path through which exhaust gas discharged from the test specimen flows, a diluent introduction unit that introduces a diluent into the exhaust gas flow path, and the above-described analysis device.

If this type of structure is employed, then it is possible to obtain the same type of action and effects as those obtained from the above-described analysis device.

It is desirable that the exhaust gas flow path be further provided with a storage unit in which the diluted waste liquid is stored on a downstream side of the diluent introduction unit, and that the analysis device measure a concentration of a component contained in the diluted waste liquid stored in the storage unit.

If this type of structure is employed, then because the component concentration measurement unit measures a component concentration of a fixed quantity of the diluted waste liquid stored in in the storage unit, it is possible to make a measurement without this measurement being affected by fluctuations in the quantity of waste liquid.

Furthermore, after the diluent has been introduced into the exhaust gas flow path, because a fixed quantity of diluted waste liquid is stored in the storage unit, it is possible to secure a sufficient quantity of liquid that is required by the component concentration measurement unit in order to make a measurement.

It is also possible for the exhaust gas flow path to be further provided with a cooler that is located on the downstream side of the diluent introduction unit and on an upstream side of the analysis device, and that cools the exhaust gas discharged from the test specimen.

If this type of structure is employed, then because the diluent introduction unit introduces the diluent into the exhaust gas flow path on the upstream side of the cooler, the exhaust gas is cooled and liquefied by the cooler, so that the quantity of waste liquid increases, and the diluent and waste liquid are mixed together in the cooler. As a result, after passing through the cooler, because the quantity of the diluted waste liquid increases further, the component concentration measurement unit is able to measure a component concentration even more accurately.

It is also possible for the analysis device to be further provided with a mixer unit that is located on the exhaust gas flow path on the downstream side of the diluent introduction unit, and that mixes the diluent and the waste liquid together with the exhaust gas from the fuel cell, and for the component concentration measurement unit to measure the component concentration after the waste liquid has passed through the mixer unit.

If this type of structure is employed, then because the diluent and the waste liquid are mixed together with the exhaust gas from the fuel cell by the mixer unit, it is possible to thoroughly mix together the diluent and the waste liquid.

Moreover, because the diluted waste liquid is in a state in which the waste liquid and the diluent are thoroughly mixed together, any effects from air bubbles being introduced into the diluted waste liquid are reduced. As a result, the component concentration measurement unit is able to measure a component concentration of the diluted waste liquid even more accurately.

An analysis method for analyzing a waste liquid flowing through an exhaust gas flow path of a test specimen is characterized in that a diluent that dilutes the waste liquid is introduced into the exhaust gas flow path, a component concentration of a component contained in the diluted waste liquid that has been diluted by the diluent is measured, and the component concentration in the waste liquid before dilution by the diluent is calculated from the component concentration in the diluted waste liquid.

If this type of structure is employed, then it is possible to obtain the same type of action and effects as those obtained from the above-described analysis device.

[Effects of the Invention]

According to the present invention which is formed in the manner described above, it is possible for a component concentration to be accurately measured even in a case in which the test specimen being analyzed is one that only discharges a small quantity of waste liquid, such as, for example, a single-cell or small-cell fuel cell.

[Brief Description of the Drawings]

[FIG. 1] FIG. 1 is a schematic view showing a fuel cell evaluation system according to an embodiment of the present invention.
[FIG. 2] FIG. 2 is a functional block diagram of a calculation unit in an analysis device of the same embodiment.
[FIG. 3] FIG. 3 is a flowchart showing an analysis method of the same embodiment.
[FIG. 4] FIG. 4 is a schematic view showing a fuel cell evaluation system according to another embodiment.

[Best Embodiments for Implementing the Invention]

Hereinafter, an embodiment of a test specimen evaluation system that employs an analysis device according to the present invention will be described with reference to the drawings. Note that, in order to simplify an understanding thereof, each of the drawings depicted below is shown schematically with omissions or enhancements made where these have been deemed appropriate. In addition, component elements that are the same in the respective drawings are indicated by the same descriptive symbols and any duplicated description thereof is omitted.

In the present embodiment, a case in which a test specimen is a fuel cell (FC), which is an electrochemical cell, will be described. A test specimen evaluation system 100 according to the present embodiment evaluates the fuel cell (FC) that generates power via an electrochemical reaction between hydrogen which is supplied to an anode side and oxygen which is supplied to a cathode side.

The fuel cell FC used as the test specimen here is, for example, a fuel cell FC consisting of a single cell or a small number of cells that produces only a small quantity of water via an electrochemical reaction. Here, the term 'fuel cell FC that produces only a small quantity of water' indicates that the quantity of water produced is less than 1 ml/min, or even, in some cases, less than 0.5 ml/min. Note that examples of the fuel cell FC include solid polymer fuel cells, solid oxide fuel cells, and phosphoric acid fuel cells and the like.

[System Structure]

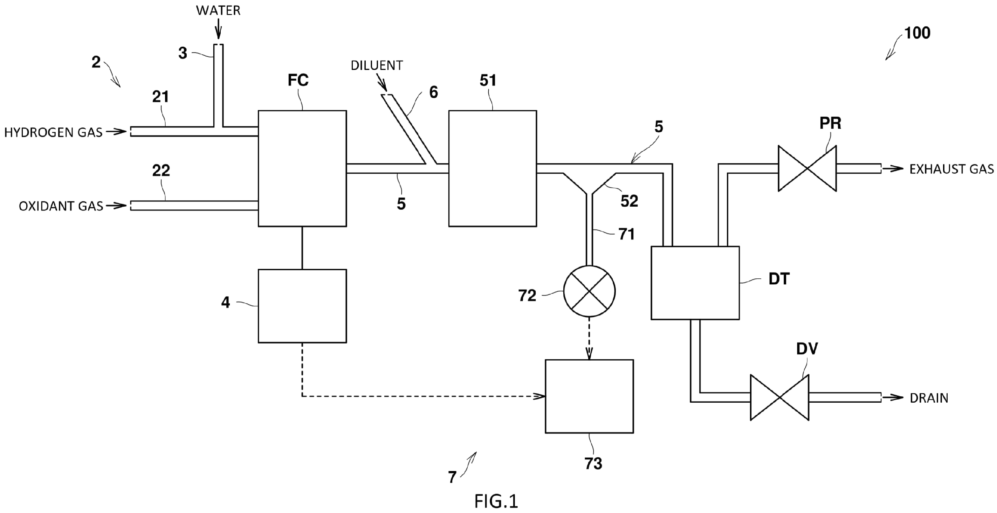

More specifically, the test specimen evaluation system 100 measures a component concentration, which is a concentration of a component contained in waste liquid from the fuel cell FC that is serving as the test specimen, and is thereby able to evaluate the condition of the fuel cell FC. As shown in FIG. 1, the test specimen evaluation system 100 includes a supply gas flow path 2 through which flows a supply gas, which is a gas that is supplied to the fuel cell FC, a test specimen evaluation unit 4 that evaluates a condition of the fuel cell FC, an exhaust gas flow path 5 through which flows exhaust gas discharged from the fuel cell FC, a diluent introduction unit 6 that introduces a diluent into the exhaust gas flow path 5, and an analysis device 7 that analyzes the waste liquid that has been diluted with the diluent and is flowing through the exhaust gas flow path 5.

Note that, in the present embodiment, the fuel cell evaluation system 100 is additionally provided with a drain tank DT that is located on a downstream side of the exhaust gas flow path 5 and stores drainage liquid contained in the exhaust gas, a drain discharge valve DV that is connected to the drain tank DT via a pipe and discharges the drainage liquid, and/or a pressure regulating valve PR that discharges the exhaust gas from the drain tank DT to the outside of the system via a pipe.

Hereinafter, a structure of each portion of the fuel cell evaluation system (i.e., the test specimen evaluation system) 100 will be described.

In the present embodiment, the supply gas flow path 2 includes a hydrogen gas flow path 21 through which hydrogen that is to be supplied to the fuel cell FC flows, and an oxygen gas flow path 22 through which oxygen that is to be supplied to the fuel cell FC flows.

The hydrogen gas flow path 21 is connected to a hydrogen source (not shown in the drawings) and supplies hydrogen gas that contains hydrogen to the fuel cell FC. Note that a flow rate regulating device (not shown in the drawings), such as, for example, a mass flow controller, a flow rate regulating valve, or a capillary, or the like that regulates the flow rate of the hydrogen gas is provided on the hydrogen gas flow path 21.

The oxygen gas flow path 22 supplies oxygen gas that contains oxygen to the fuel cell FC. For example, air can be used as the oxygen gas. Note that a flow rate regulating device (not shown in the drawings), such as, for example, a mass flow controller, a flow rate regulating valve, or a capillary, or the like that regulates the flow rate of the oxygen gas is provided on the oxygen gas flow path 22.

Note also that, in the present embodiment, the fuel cell evaluation system 100 may be further provided with a water addition flow path 3 that adds water (in the form of liquid water, water vapor, or a gas-liquid fluid mixture of water and water vapor) to the hydrogen supplied to the fuel cell FC. The water addition flow path 3 is connected to the hydrogen gas flow path 21 and adds water to the hydrogen gas by supplying water to the hydrogen gas flow path 21. The water addition flow path 3 is provided with flow rate regulating device (not shown in the drawings), such as, for example, a mass flow controller, a flow rate regulating valve, or a capillary, or the like that regulates the flow rate of the water being added, or with a flow rate measurement device (not shown in the drawings) that measures the quantity of water that is being added. The quantity of water added through the water addition flow path 3 is converted into a signal and output to the analysis device 7 (described below).

The test specimen evaluation unit 4 evaluates the condition of the fuel cell FC by measuring the quantity of power generated by the fuel cell FC. In the present embodiment, the test specimen evaluation unit 4 is an ammeter that measures a current flowing through the fuel cell FC. The current value measured by the test specimen evaluation unit 4 is converted into a signal and output to the analysis device 7 (described below).

The exhaust gas flow path 5 carries exhaust gas or waste liquid discharged from the fuel cell FC. In the present embodiment, the exhaust gas is a gas or gas-liquid fluid mixture containing water vapor that is generated as a result of the water produced by the fuel cell FC undergoing a change of state. Note that the temperature of the exhaust gas after being discharged from the fuel cell FC is between approximately 20 and 1000 °C. Moreover, the waste liquid is a condensed liquid formed by the condensation of the water produced by the fuel cell FC or of the water vapor contained in the exhaust gas. The exhaust gas flow path 5 may also be provided with a cooler 51 that cools the exhaust gas from the fuel cell FC, and/or with a storage unit 52 that stores diluted waste liquid, which is waste liquid that has been diluted with a diluent.

The cooler 51 cools the exhaust gas flowing through the exhaust gas flow path 5. In the present embodiment, the cooler 51 cools the exhaust gas after the diluent has been introduced into the exhaust gas. The cooler 51 is a water-cooled type of heat exchanger. Here, the flow path through which the exhaust gas flows within the heat exchanger is lengthened to increase the heat transfer surface area, and the exhaust gas is mixed with water as it is being condensed. As a result, because the diluent and the waste liquid are sufficiently mixed together in the flow path through which the exhaust gas flows in the heat exchanger, the cooler 51 of the present embodiment also functions as a mixer unit that mixes together the diluent and the waste liquid. Note that, although the cooler 51 of the present embodiment is a water-cooled heat exchanger, the present invention is not limited to this, and the cooler 51 may instead be an air-cooled heat exchanger, a Peltier element, or a cooler that cools from the outside the piping used to form the exhaust gas flow path 5.

The storage unit 52 stores the diluted waste liquid and, in the present embodiment, is provided on the exhaust gas flow path 5 on the downstream side of the cooler 51. In the present embodiment, the term 'diluted waste liquid' refers to the diluent and waste liquid that have been thoroughly mixed together as a result of passing through the cooler 51. More specifically, the storage unit 52 is formed, for example, in a tapered shape so that the diluted waste liquid can be stored below the storage unit 52, but it may also be formed in another shape.

In the present embodiment, the diluent introduction unit 6 is provided on the exhaust gas flow path 5 on the upstream side of the cooler 51, the storage unit 52, and a component concentration measurement unit 72, and introduces the diluent into the exhaust gas flow path 5. In the present embodiment, the diluent introduction unit 6 introduces a diluent from a diluent source (not shown in the drawings) at a predetermined uniform flow rate into exhaust gas flow path 5. The diluent here may be, for example, pure water or a solution to which supporting salts have been added. Note that, in addition to the diluent, the diluent introduction unit 6 may also be used to introduce a calibration liquid that is used to calibrate the component concentration measurement unit 72.

Furthermore, a fluid sensor (not shown in the drawings) that measures a flow rate of the diluent may also be provided in the diluent introduction unit 6. The flow rate of the diluent measured by the fluid sensor is converted into a signal and output to an information processing unit 73 (described below).

[Device Structure of the Analysis Device 7]

The analysis device 7 is used in the fuel cell evaluation system 100 and analyzes waste liquid in the fuel cell FC by measuring a component concentration. More specifically, the analysis device 7 is provided with a sampling unit 71 that samples the diluted waste liquid flowing through the exhaust gas flow path 5 (or being stored in the storage unit 52), the component concentration measurement unit 72 that measures a component concentration of the sampled diluted waste liquid, and the information processing unit 73 that processes the measured information.

The component concentration measurement unit 72 measures the component concentration of the diluted waste liquid after the diluent and the waste liquid have been thoroughly mixed together. More specifically, the component concentration measurement unit 72 is located on the downstream side of the diluent introduction unit 6 and the cooler 51, and continuously measures the component concentration of the diluted waste liquid. Note that the component concentration measurement unit 72 may also be a unit that makes batch measurements of the component concentration of the diluted waste liquid.

Moreover, the component concentration measurement unit 72 is connected to the storage unit 52 via the sampling unit 71 that samples the diluted waste liquid from the storage unit 52. This allows the diluted waste liquid to be stably supplied from the storage unit 52 to the component concentration measurement unit 72.

Furthermore, in the present embodiment, the component concentration measurement unit 72 is a pH meter that measures, for example, the pH of the diluted waste liquid. In the present embodiment, the component concentration is a pH, however, the component concentration is not limited to being a pH and may be a concentration of fluorine ions, carbonate ions, or other ions that are contained in the diluted waste liquid. Moreover, the component concentration measurement unit 72 is not limited to being a pH meter, and may instead be an ion concentration meter that measures a concentration of ions contained in the diluted waste liquid, or another type of concentration measurement device.

The information processing unit 73 calculates a concentration of a component contained in the waste liquid before dilution from the concentration of the component contained in the waste liquid after dilution that was measured by the component concentration measurement unit 72. More specifically, the information processing unit 73 calculates a dilution ratio of the diluted waste liquid from the quantity of water added to the supply gas supplied to the fuel cell FC, the quantity of water produced by the fuel cell FC, and the quantity of diluent, and then uses this dilution ratio to calculate the concentration of the component contained in the waste liquid before dilution.

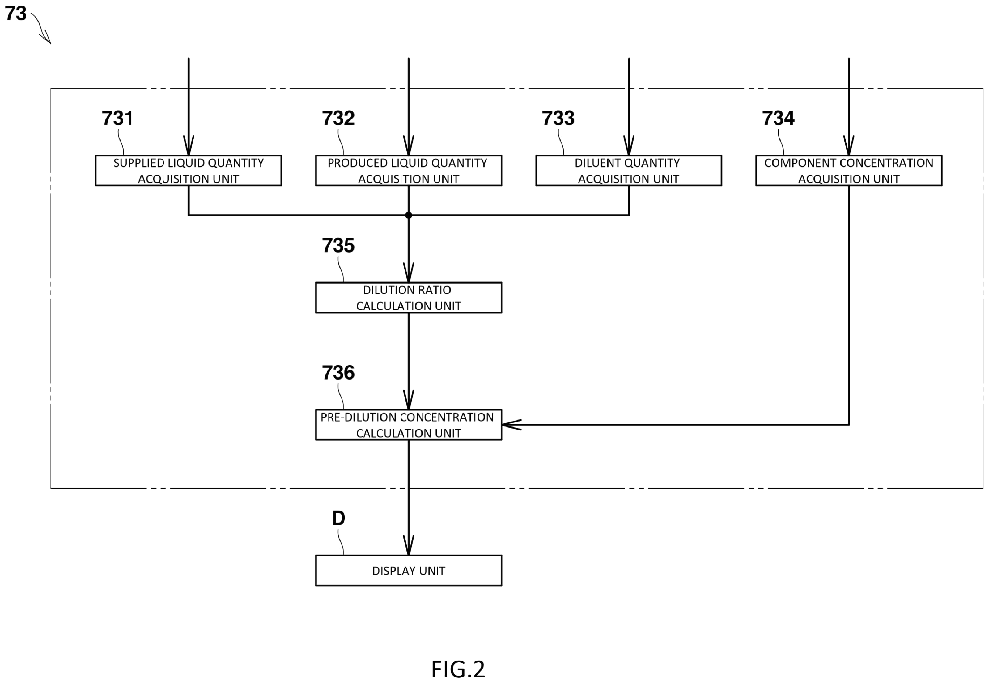

The information processing unit 73 is a general-purpose or dedicated computer that is provided with a CPU and memory and the like and, as is shown in FIG. 2, as a result of this CPU and peripheral devices thereof operating in mutual collaboration in accordance with a program stored in a predetermined area of the memory, performs the functions of at least a pre-dilution concentration calculation unit 736.

Functional blocks of the information processing unit 73 will now be described using FIG 2. The information processing unit 73 is provided with a supplied liquid quantity acquisition unit 731 that acquires a quantity of water added to the supply gas, a produced liquid quantity acquisition unit 732 that acquires a quantity of water produced by the fuel cell FC, a diluent flow rate acquisition unit 733 that acquires a flow rate of an introduced diluent, a component concentration acquisition unit 734 that acquires measured component concentrations, a dilution ratio calculation unit 735 that calculates a dilution ratio, which is a ratio of the diluent relative to the diluted waste liquid, and a pre-dilution concentration calculation unit 736 that calculates a pre-dilution concentration, which is a concentration of a component in the waste liquid prior to the diluent being introduced therein.

The supplied liquid quantity acquisition unit 731 acquires the quantity of water added to hydrogen gas. In the present embodiment, the supplied liquid quantity acquisition unit 731 acquires the flow rate of the water that has been measured by a flow rate measurement device provided on the water addition flow path 3.

The produced liquid quantity acquisition unit 732 acquires the quantity of water produced by the fuel cell FC. In the present embodiment, the produced liquid quantity acquisition unit 732 acquires a current measured by the test specimen evaluation unit 4, and then converts this current into the quantity of water produced by the fuel cell FC. Note that an example of the equation used to convert the measured current into the quantity of water produced by the fuel cell FC is shown, for example, by the following equation, however, the formula for performing this conversion is not limited to this.

[Equation 2]

$$W = \frac{MiS}{2F} \times 60 \times 10^{-3}$$

Here, W is the quantity of water produced in the fuel cell FC, i is the current density, S is the cell surface area of the fuel cell FC, M is the molar mass of water, and F is the Faraday constant.

The diluent flow rate acquisition unit 733 acquires the quantity of diluent introduced into the exhaust gas flow path 5. In the present embodiment, the diluent flow rate acquisition unit 733 acquires a quantity of diluent measured by a fluid sensor.

The component concentration acquisition unit 734 acquires a component concentration of the diluted waste liquid that was measured by the component concentration measurement unit 72.

The dilution ratio calculation unit 735 calculates a dilution ratio based on the quantities of water added to the water addition flow path 3 from each of the supplied liquid quantity acquisition unit 731, the produced liquid quantity acquisition unit 732, and the diluent flow rate acquisition unit 733, the quantity of water produced in the fuel cell FC, and the quantity of diluent introduced into the exhaust gas flow path 5. The dilution ratio calculation unit 735 calculates the dilution ratio using the following equation:

[Equation 3]

$$\text{Dilution ratio} = \frac{A + B + C}{A + B}$$

Here, A is the quantity of water added to the hydrogen gas supplied to the fuel cell FC, B is the quantity of water produced in the fuel cell FC, and C is the quantity of diluent introduced into the exhaust gas flow path 5 by the diluent introduction unit 6. Note that, in the cooler 51, while water vapor in excess of the saturation water vapor quantity becomes liquid water, in a case in which a portion of the water vapor is discharged from the cooler 51 unchanged as water vapor without being liquefied, when calculating the dilution ratio, it is possible for the dilution ratio to be corrected by calculating the quantity of water vapor discharged from the cooler 51. Note that, in a case in which water is not added to the hydrogen gas supplied to the fuel cell FC, then A can be omitted from the dilution ratio calculation formula.

The pre-dilution concentration calculation unit 736 calculates a concentration of a component in the waste liquid before it is diluted with the diluent from the concentration of the component in the waste liquid after dilution. More specifically, the pre-dilution concentration calculation unit 736 calculates the component concentration before dilution using the diluent is performed based on the component concentration of the waste liquid after dilution that is acquired by the component concentration acquisition unit 734, and on the dilution ratio calculated by the dilution ratio calculation unit 735. In the present embodiment, the pre-dilution concentration calculation unit 736 calculates the pH of the waste liquid before it is diluted with the diluent based on the pH of the waste liquid after it is diluted and on the dilution ratio.

Note that, when the pre-dilution concentration calculation unit 736 calculates a component concentration of the waste liquid prior to the dilution thereof with the diluent, there may be cases in which the degree of acid dissociation of, for example, hydrofluoric acid, carbonic acid, or hydrogen peroxide is changed due to changes in the dilution ratio, the pH of the waste liquid, or the temperature of the waste liquid. For this reason, it is also possible for the pre-dilution concentration calculation unit 736 to store correction coefficients corresponding to the degree of acid dissociation, and to correct a component concentration of the waste liquid prior to the dilution thereof with the diluent based on these correction coefficients.

[Analysis Method]

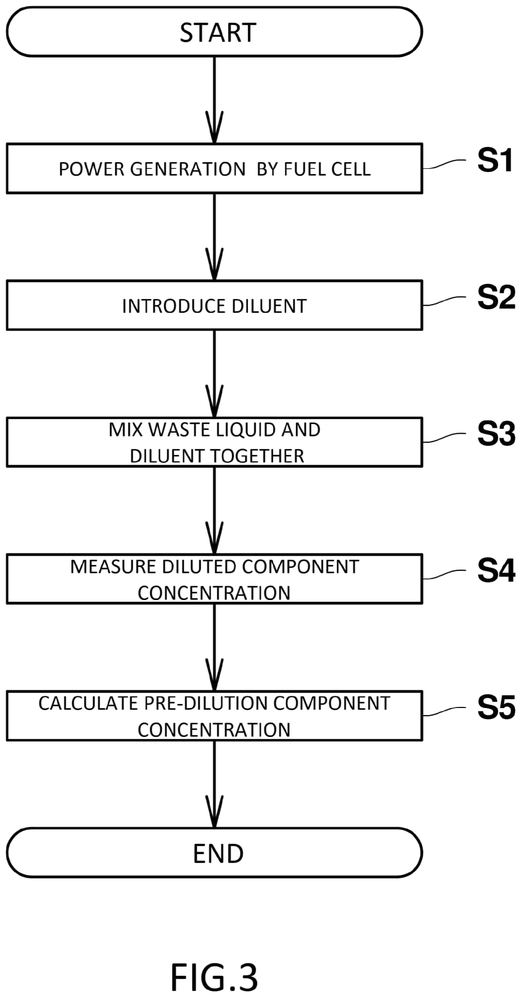

Next, an analysis method performed using the analysis device 7 of the present embodiment will be described with reference to FIG. 3.

A user installs a single-cell fuel cell FC or a multi-cell fuel cell FC. Next, air containing hydrogen and oxygen is supplied to the fuel cell FC via the hydrogen gas flow path 21 and the oxygen gas flow path 22 respectively. Note that, in the present embodiment, water is added to the hydrogen gas flow path 21.

When hydrogen and oxygen are supplied to the fuel cell FC, the fuel cell FC produces water through an electrochemical reaction, and the test specimen evaluation unit 4 measures the current generated by this electrochemical reaction (S1). The exhaust gas and waste liquid discharged from the fuel cell FC flow through the exhaust gas flow path 5.

When the exhaust gas and waste liquid flow into the exhaust gas flow path 5, a diluent is introduced into the exhaust gas flow path 5 from the diluent introduction unit 6 (S2). Note that the introduction of the diluent may be performed by a user, or may be performed by a fluid device such as, for example, a pump.

Once the diluent has been introduced into the exhaust gas flow path 5, the diluent, waste liquid, and exhaust gas are introduced into the cooler 51. The exhaust gas is cooled by the cooler 51 so as to be liquefied and become waste liquid, and the diluent and waste liquid are mixed together with the exhaust gas inside the cooler 51 (S3).

The diluent and the waste liquid discharged from the cooler 51 are thoroughly mixed together so as to form diluted waste liquid, which is then stored in the storage unit 52. Next, the sampling unit 71 supplies the diluted waste liquid stored in the storage unit 52 to the component concentration measurement unit 72, and the component concentration measurement unit 72 continuously measures a component concentration of the diluted waste liquid (S4).

After the component concentration measurement unit 72 has measured the component concentration, and the dilution ratio calculation unit 735 has calculated the dilution ratio, the pre-dilution concentration calculation unit 736 calculates the component concentration of the waste liquid before it is diluted with the diluent (S5). The pre-dilution concentration calculation unit 736 then outputs the calculated pH, for example, to a display unit D, such as a display monitor.

[Effects Obtained from the Present Embodiment]

According to the analysis device 7 of the present embodiment, because the diluent introduction unit 6 introduces the diluent into the exhaust gas flow path 5 of the fuel cell FC, the quantity of diluted waste liquid flowing on the downstream side of the diluent introduction unit 6 is increased by the quantity of the introduced diluent. As a result, because the component concentration measurement unit 72, which is located on the downstream side of the diluent introduction unit 6, is able to ensure a sufficient quantity of liquid when measuring a component concentration, it is possible for a component concentration to be accurately measured.

Moreover, because the quantity of liquid is increased by the introduction therein of the diluent, it is possible to reduce any effect on the measurement that might be generated as a result of air bubble being mixed therein, so that the component concentration measurement unit 72 is able to accurately measure a component concentration.

Furthermore, because a component concentration of a waste liquid before dilution is calculated by the pre-dilution concentration calculation unit 736, even in a case in which the waste liquid is diluted because there is only a small quantity thereof, it is still possible for the component concentration of even a small quantity of waste liquid to be measured.

Moreover, according to the present embodiment, because the diluent introduction unit 6 introduces the diluent into the exhaust gas flow path 5 on the upstream side of the cooler 51, the exhaust gas is cooled by the cooler 51 so as to become liquefied, thereby increasing the quantity of waste liquid, and the diluent and waste liquid are mixed together in the cooler 51. As a result, after passing through the cooler 51, because the quantity of the diluted waste liquid increases further, the component concentration measurement unit 72 is able to measure a component concentration even more accurately.

Moreover, because the cooler 51 of the present embodiment is a heat exchanger, and the flow path through which the exhaust gas flows within the heat exchanger is long, so that the exhaust gas is condensed while being mixed with water, the cooler 51 of the present embodiment also performs a function of a mixer unit. As a result, the diluent and waste liquid are mixed together with the exhaust gas from the fuel cell FC in the cooler 51, so that the diluent and waste liquid are able to be thoroughly mixed together.

In addition, because the diluted waste liquid is in a state in which the waste liquid and diluent are thoroughly mixed together, any effects that might arise as a result of air bubbles being mixed into the diluted waste liquid are reduced. As a result, the component concentration measurement unit 72 is able to more accurately measure a component concentration of the diluted waste liquid.

Furthermore, according to the present embodiment, because the component concentration measurement unit 72 measures the component concentration of a fixed quantity of diluted waste liquid that is being stored in storage unit 52, the measurement is able to be performed without being affected by variations in the quantity of waste liquid, and the component concentration measurement unit 72 is able to secure a sufficient quantity of liquid that is required for the measurement.

In addition, in the present embodiment, because the quantity of water B produced by the fuel cell FC is calculated based on the current of the fuel cell FC, the quantity of water B produced by the fuel cell FC can be calculated directly and easily.

Furthermore, in the present embodiment, because the diluent introduction unit 6 is able to introduce a calibration liquid that is used to calibrate the component concentration measurement unit 72, in a case in which the component concentration measurement unit 72 is to be calibrated, there is no need to remove the component concentration measurement unit 72. Moreover, because the user is able to calibrate the component concentration measurement unit 72 without having to touch the calibration liquid, the calibration of the component concentration measurement unit 72 can be performed safely.

[Additional Embodiments]

Note that the present invention is not limited to the above-described embodiment.

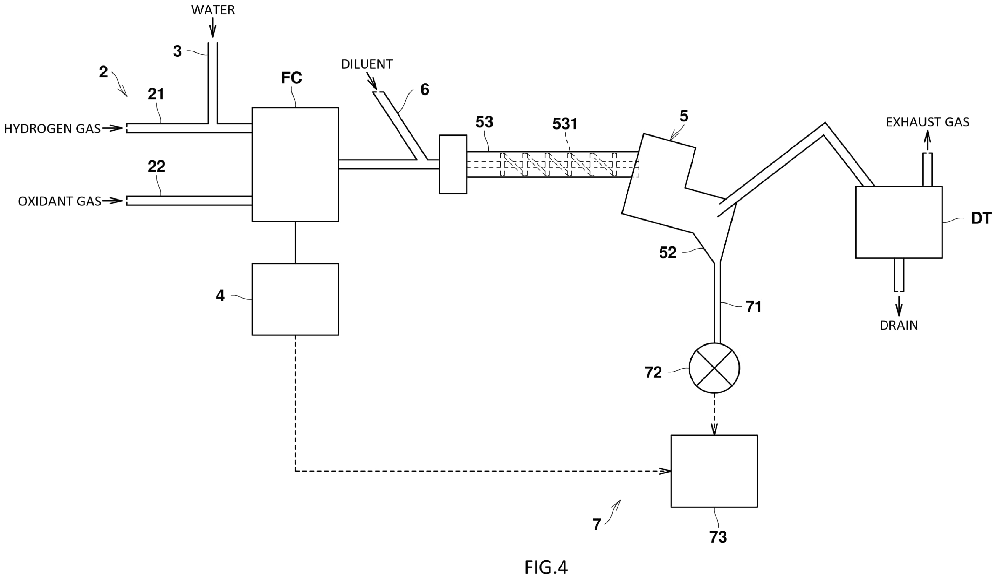

For example, as is shown in FIG. 4, it is also possible to employ a structure in which the fuel cell evaluation system 100 is further provided with a mixer unit 53 that is provided on the downstream side of the diluent introduction unit 6, and that mixes the diluent and waste liquid together with the exhaust gas from the fuel cell FC. More specifically, this mixer unit 53 is provided with a rotating blade 531 that rotates in order to mix the diluent and waste liquid together with the exhaust gas, and the diluent and waste liquid are thoroughly mixed together by the rotation of this rotating blade 531. As a result, the diluted waste liquid is placed in a state in which the waste liquid and the diluent are thoroughly mixed together, and it is possible to further suppress the likelihood of air bubbles being mixed into the diluted waste liquid. Because of this, the component concentration measurement unit 72 is able to measure the concentration of a component in the diluted waste liquid even more accurately.

Furthermore, as is shown in FIG. 4, in order to ensure reliable gas-liquid separation between the diluted waste liquid and the exhaust gas, it is also possible for the diluted waste liquid to be stored in the storage unit 52 after the diluted waste liquid and the exhaust gas discharged from the mixer unit 53 have struck the inner wall of the exhaust gas flow path 5. More specifically, the exhaust gas flow path 5 from the discharge port of the mixer unit 53 to the storage unit 52 is formed, for example, in an L-shape. Note that the portion of the exhaust gas flow path 5 that is formed in an L-shape is disposed so as to be inclined relative to the flow path of the mixer unit 53 through which the diluted waste liquid or exhaust gas is discharged. Once a fixed quantity or more of the diluted waste liquid has accumulated in the storage unit 52, it flows together with the exhaust gas into the drain tank DT.

In the present embodiment, the diluent introduction unit 6 introduces the diluent on the upstream side of the cooler 51, however, it is also possible for the diluent to instead be introduced at a location on the downstream side of the cooler 51 and on the upstream side of the component concentration measurement unit 72.

In the present embodiment, the cooler 51 also functions as a mixer unit, however, it is sufficient if the cooler 51 cools the exhaust gas and it is not necessary that it also function as a mixer unit.

In the present embodiment, the component concentration measurement unit 72 measures a component concentration via the sampling unit 71, however, it is also possible for the component concentration measurement unit 72 to measure a component concentration by being inserted directly into the storage unit 52 or the exhaust gas flow path 5. In this case, it is not essential that the analysis device 7 include the sampling unit 71 and/or the storage unit 52.

In the present embodiment, the component concentration measurement unit 72 calculates the quantity of water produced by the fuel cell FC based on the current from the fuel cell FC, however, it is also possible, for example, for the component concentration measurement unit 72 to use a flow meter to calculate the quantity of water discharged from the fuel cell FC. Moreover, the component concentration measurement unit 72 may also calculate the quantity of water produced in the fuel cell FC from the hydrogen concentration in the exhaust gas, the oxygen concentration in the exhaust gas, or the size of the decrease in water vapor.

In the present embodiment, the component concentration measurement unit 72 continuously measures a component concentration, however, it is also possible for the component concentration measurement unit 72 to perform a batch measurement of component concentrations.

In the present embodiment, the test specimen evaluated by the test specimen evaluation system is a fuel cell (FC), however, the test specimen may instead be a test specimen from which a small quantity of liquid is discharged together with a gas, such as, for example, a water electrolysis cell, a co-electrolysis catalyst, a methanation catalyst, an exhaust gas purification catalyst, or an oxidation catalyst.

More specifically, water is produced from an exhaust gas via an exhaust gas purification catalyst. Alternatively, water is produced by a reaction of carbon dioxide and hydrogen via a methanation catalyst (i.e., a methanation reaction). Alternatively, water is produced by a reaction of ammonia and oxygen via an oxidation catalyst (i.e., an ammonia reaction). Because only small quantities of water are produced in these reactions, by introducing a diluent into the produced water using the diluent introduction unit 6, it is possible to accurately measure the concentration of a component in even the small quantities of water generated from these test specimens.

In the present embodiment, the analysis device 7 analyzes waste liquid from a fuel cell FC consisting of a single cell or a small number of cells, however, it is also possible for the analysis device 7 to analyze waste liquid from a multi-cell fuel cell FC. In other words, the fuel cell FC serving as the test specimen is a single-cell fuel cell FC or a multi-cell fuel cell FC.

In the present embodiment, hydrogen gas and oxygen gas flow through the supply gas flow path 2, however, in a case in which a test specimen other than the fuel cell FC is being evaluated, it is also possible for a gas other than hydrogen gas or oxygen gas to be made to flow through the supply gas flow path 2. More specifically, in a case in which the test specimen is an exhaust gas purification catalyst, it is possible for exhaust gas to be made to flow through the supply gas flow path 2. Moreover, in a case in which the test specimen is a methanation catalyst, then it is possible for carbon dioxide and hydrogen to be made to flow through the supply gas flow path 2. Furthermore, in a case in which the test specimen is an oxidation catalyst, then it is possible for ammonia and oxygen to be made to flow through the supply gas flow path 2.

In the present embodiment, the test specimen evaluation unit 4 evaluates the condition of the fuel cell FC by measuring the quantity of power generated by the fuel cell FC, however, it is also possible for the test specimen evaluation unit 4 to measure another state of the fuel cell FC. More specifically, it is also possible for the test specimen evaluation unit 4 to measure a quantity of hydrogen supplied to the fuel cell FC, a quantity of hydrogen discharged from the fuel cell FC, a quantity of oxygen supplied to the fuel cell FC, a temperature of the fuel cell FC, a quantity A of water added to the hydrogen gas supplied to the fuel cell FC, a quantity B of water produced in the fuel cell FC, and/or a quantity C of diluent introduced into the exhaust gas flow path 5 by the diluent introduction unit 6.

Note that it is also possible for the fuel cell evaluation system 100 to be additionally provided with a hydrogen concentration meter that measures a hydrogen concentration in the exhaust gas. Moreover, it is also possible for the fuel cell evaluation system 100 to be further provided with a flow meter that measures a flow rate of the exhaust gas. The fuel cell evaluation system 100 is able to determine a quantity of hydrogen discharged from the fuel cell FC from the hydrogen concentration measured by the hydrogen concentration meter, and the exhaust gas flow rate measured by the flow meter. In this case, the hydrogen concentration meter and/or flow meter may be installed on the downstream side of the pressure regulating valve PR.

Furthermore, it is also possible for the fuel cell evaluation system 100 to be provided with a first display unit that is able to display the above-described parameters measured by the test specimen evaluation unit 4, and a second display unit that is able to display a component concentration before dilution with the diluent, and/or a component concentration after dilution with the diluent. Note that, in this case, the first display unit and second display unit are formed mutually separate from each other, however, it is also possible for the first display unit and second display unit to be formed by a single display unit. The contents displayed on the first and second display units are able to be mutually compared with each other.

While preferred embodiments of the invention have been described and illustrated above, it should be understood that these are exemplary of the invention and are not to be considered as limiting. Additions, omissions, substitutions, and other modifications can be made without departing from the spirit or scope of the present invention. Accordingly, the invention is not to be considered as limited by the foregoing description and is only limited by the scope of the appended claims.

[Industrial Applicability]

According to the present invention, it is possible to accurately measure a component concentration even in a case in which a fuel cell that only discharges a small quantity of waste liquid is being analyzed, such as in the case of, for example, a single-cell or small-cell fuel cell.

[Description of the Reference Numerals]

| | |
|---|---|
| 100 | Fuel Cell Evaluation System |
| 2 | Supply Gas Flow Path |
| 21 | Hydrogen Gas Flow Path |
| 22 | Oxidant Gas Flow Path |
| 3 | Water Addition Flow Path |
| 4 | Test Specimen Evaluation Unit |
| 5 | Exhaust Gas Flow Path |
| 51 | Cooler |
| 52 | Storage Unit |
| 6 | Diluent Introduction Unit |
| 7 | Analysis Device |
| 71 | Component Concentration Measurement Unit |
| 72 | Sampling Unit |
| 73 | Information Processing Unit |
| 731 | Supplied Liquid Quantity Acquisition Unit |
| 732 | Produced Liquid Quantity Acquisition Unit |
| 733 | Diluent Quantity Acquisition Unit |
| 734 | Component Concentration Acquisition Unit |
| 735 | Dilution Ratio Calculation Unit |
| 736 | Pre-Dilution Concentration Calculation Unit |
| FC | Fuel Cell |

**Claims**

1. An analysis device that is used in a test specimen evaluation apparatus that evaluates a condition of a test specimen by analyzing waste liquid from the test specimen, comprising
a component concentration measurement unit that is connected to an exhaust gas flow path through which flows diluted waste liquid created by diluting the waste liquid discharged from the test specimen with a diluent, and that measures a concentration of a component contained in the diluted waste liquid .

2. The analysis device according to Claim 1, wherein the analysis device comprises:

   a sampling unit that samples the diluted waste liquid from the exhaust gas flow path or from a storage unit that is disposed on the exhaust gas flow path; and
   a component concentration measurement unit that measures a concentration of a component contained in the diluted waste liquid that has been sampled by the sampling unit.

3. The analysis device according to Claim 2, wherein the analysis device further comprises
an information processing unit that calculates a concentration of a component contained in a waste liquid before dilution from a concentration of a component contained in the waste liquid after dilution that was measured by the component concentration measurement unit.

4. The analysis device according to Claim 3, wherein the information processing unit calculates a dilution ratio of the diluted waste liquid from a quantity of water added to a supply gas supplied to the test specimen, a quantity of water produced by the test specimen, and a quantity of the diluent, and then calculates a concentration of a component contained in the waste liquid before dilution using this dilution ratio.

5. The analysis device according to Claim 4, in which the information processing unit calculates the dilution ratio using the following equation:

$$\text{Dilution ratio} = \frac{A + B + C}{A + B}$$

wherein A is the quantity of water added to the supply gas supplied to the test specimen, B is the quantity of water produced by the test specimen, and C is the quantity of diluent.

6. The analysis device according to any one of Claim 4 or Claim 5, wherein the test specimen is a fuel cell, and

the quantity B of water produced by the test specimen is calculated based on a quantity of power generated by the fuel cell.

7. The analysis device according to any one of Claim 1 through Claim 5, wherein

the test specimen a water electrolysis cell, a coelectrolysis catalyst, a methanation catalyst, an exhaust gas purification catalyst and/or an oxidation catalyst.

8. A test specimen evaluation system that evaluates a condition of a test specimen, comprising:

a supply gas flow path that supplies a gas to the test specimen;

a test specimen evaluation unit that evaluates a condition of the test specimen;

an exhaust gas flow path through which exhaust gas discharged from the test specimen flows;

a diluent introduction unit that introduces a diluent into the exhaust gas flow path; and

the analysis device according to any one of claims 1 through 7.

9. The test specimen evaluation system according to Claim 8, wherein the exhaust gas flow path further comprises a storage unit that is disposed on a downstream side of the diluent introduction unit, and in which the diluted waste liquid is stored, and wherein the analysis device measures a concentration of a component contained in the diluted waste liquid stored in the storage unit.

10. The test specimen evaluation system according to any one of Claim 8 or Claim 9, wherein

the exhaust gas flow path further comprises a cooler that is disposed on the downstream side of the diluent introduction unit and on an upstream side of the analysis device, and that cools the exhaust gas discharged from the test specimen.

11. The test specimen evaluation system according to any one of Claim 8 through Claim 10, wherein

the exhaust gas flow path further comprises a mixer unit that is disposed on the downstream side of the diluent introduction unit and on the upstream side of the analysis device, and that mixes the diluent and the waste liquid together with the exhaust gas from the test specimen, and

the component concentration measurement unit measures the component concentration after the diluted waste liquid has passed through the mixer unit.

12. An analysis method for analyzing a waste liquid flowing through an exhaust gas flow path of a test specimen in which:

a diluent that dilutes the waste liquid is introduced into the exhaust gas flow path; and

a component concentration of a component contained in the diluted waste liquid that has been diluted by the diluent is measured.

FIG.1

73

731 SUPPLIED LIQUID QUANTITY ACQUISITION UNIT

732 PRODUCED LIQUID QUANTITY ACQUISITION UNIT

733 DILUENT QUANTITY ACQUISITION UNIT

734 COMPONENT CONCENTRATION ACQUISITION UNIT

735 DILUTION RATIO CALCULATION UNIT

736 PRE-DILUTION CONCENTRATION CALCULATION UNIT

D DISPLAY UNIT

FIG.2

START

POWER GENERATION BY FUEL CELL ── S1

INTRODUCE DILUENT ── S2

MIX WASTE LIQUID AND DILUENT TOGETHER ── S3

MEASURE DILUTED COMPONENT CONCENTRATION ── S4

CALCULATE PRE-DILUTION COMPONENT CONCENTRATION ── S5

END

FIG.3

FIG.4

## INTERNATIONAL SEARCH REPORT

| International application No. |
| --- |
| **PCT/JP2024/031162** |

**A. CLASSIFICATION OF SUBJECT MATTER**

*H01M 8/0444*(2016.01)i; *C25B 15/023*(2021.01)i; *G01N 1/22*(2006.01)i; *G01N 5/00*(2006.01)i; *H01M 8/04*(2016.01)i; *H01M 8/02*(2016.01)n; *H01M 8/10*(2016.01)n; *H01M 8/12*(2016.01)n

FI:  H01M8/0444; H01M8/04 Z; G01N1/22 M; G01N5/00 Z; C25B15/023; H01M8/02; H01M8/10 101; H01M8/12 101

According to International Patent Classification (IPC) or to both national classification and IPC

**B. FIELDS SEARCHED**

Minimum documentation searched (classification system followed by classification symbols)

H01M8/0444; C25B15/023; G01N1/22; G01N5/00; H01M8/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 61-2039 A (FUJI DENKI SOUGOU KENKYUSHO KK) 08 January 1986 (1986-01-08) | 1-12 |
| A | JP 2013-188705 A (THE CHUGOKU ELECTRIC POWER CO., INC.) 26 September 2013 (2013-09-26) | 1-12 |
| A | WO 2022/255446 A1 (HORIBA, LTD.) 08 December 2022 (2022-12-08) | 1-12 |

☐ Further documents are listed in the continuation of Box C.   ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **29 October 2024** | **12 November 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/031162**

| Patent document cited in search report | | | Publication date (day/month/year) | Patent family member(s) | | | Publication date (day/month/year) |
|---|---|---|---|---|---|---|---|
| JP | 61-2039 | A | 08 January 1986 | (Family: none) | | | |
| JP | 2013-188705 | A | 26 September 2013 | (Family: none) | | | |
| WO | 2022/255446 | A1 | 08 December 2022 | EP | 4350819 | A1 | |
| | | | | CN | 117178395 | A | |

Form PCT/ISA/210 (patent family annex) (July 2022)

**EP 4 776 353 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022255446 A